# EUROPÄISCHE PATENTSCHRIFT

(11) **EP 3 526 934 B1**
(45) Veröffentlichungstag und Bekanntmachung des Hinweises auf die Patenterteilung: **30.03.2022**
(21) Anmeldenummer: 17784273.9
(22) Anmeldetag: 13.10.2017
(51) Int. Cl.: H04L 12/28

(54) **ANORDNUNG MIT EINEM ENDGERÄT UND EINER HANDBEDIENUNG UND VERFAHREN ZUR BEDIENUNG DES ENDGERÄTS**
ASSEMBLY HAVING A TERMINAL AND A MANUAL OPERATION UNIT, AND METHOD FOR OPERATING THE TERMINAL
ENSEMBLE COMPRENANT UN TERMINAL ET UNE COMMANDE MANUELLE ET PROCÉDÉ DE COMMANDE DUDIT TERMINAL

(30) Priorität: 14.10.2016 DE 102016119618
(43) Veröffentlichungstag der Anmeldung: 21.08.2019
(60) Teilanmeldung: 20213850.9
(73) Patentinhaber: ABB Schweiz AG, 5400 Baden (CH)
(72) Erfinder: WINNEWISSER, Christian, 69115 Heidelberg (DE)
(74) Vertreter: Wesch, Arno
(86) Internationale Anmeldenummer: PCT/EP2017/076154
(87) Internationale Veröffentlichungsnummer: WO 2018/069485

(56) Entgegenhaltungen:
- DE-A1-102014 103 367

## Beschreibung

Die Erfindung betrifft ein Verfahren nach dem Oberbegriff des Patentanspruchs 1.

Aus der DE 10 2014 103 367 A1 ist ein Regelsystem bekannt, bei welchem keine Steuerzentrale notwendig ist. Das Regelsystem umfasst autarke Aktoreinheiten, welche nicht auf Steuereinheiten angewiesen sind, solange keine Sollwerte geändert werden sollen. Durch mobile Geräte oder Steuereinheiten können Sollwerte von Regelgrößen eingegeben werden.

Endgeräte, die beispielsweise an ein KNX-System angeschlossen sind, umfassen üblicherweise eine Handbedienung. Insbesondere Ein- und Anzeigegeräte können eine Handbedienung aufweisen. Die Handbedienung ist üblicherweise vorgesehen, um einzelne Endgeräte eines KNX-Systems bei einer Inbetriebnahme zu unterstützen.

Bei Geräten die bislang noch keine Handbedienung aufweisen, gestaltet sich eine Bedienung allerdings als schwierig, beispielsweise beim Testen während und nach der Inbetriebnahme, zu Diagnosezwecken und zur Simulation von Ereignissen oder Zuständen.

KNX ist ein Fachbegriff für einen Feldbus zur Gebäudeautomation. In einem KNX-System wird ein solcher Feldbus für die Kommunikation von Teilnehmern des Systems verwendet.

Die Handbedienung ist in den Endgeräten selbst vorgesehen. Die Handbedienung kann mechanische Tasten, berührempfindliche Flächen und/ oder graphische Anzeigen in Form von Displays oder LEDs aufweisen. Komplexere Endgeräte sind aufgrund eingesetzter Technik oft nur unzureichend und/ oder nicht intuitiv betätigbar.

Die Eingabe- und Anzeigemöglichkeiten sind häufig an die Größe der Endgeräte gebunden. Weiterhin entstehen Kosten für Funktionen, die meist nur einmalig während der Lebens- oder Betriebsdauer des Endgerätes verwendet werden.

Des Weiteren ist insbesondere bei Reiheneinbau-Geräten (REG) der Einbauort selten der Ort der Wirkung, so dass ein Prüfen einer Funktion bzw. Wirkung eines Endgeräts unter Umständen schwierig ist.

Der Einbauort nimmt außerdem Einfluss auf die Bedienbarkeit des Endgeräts und kann eine Handbedienung verhindern oder einschränken, beispielsweise wenn ein Endgerät an einem schwer zugänglichen Ort verbaut ist.

Außerdem sind Endgeräte, insbesondere dezentrale Steuergeräte, bekannt, deren Sensorik zum Zeitpunkt der Inbetriebnahme nicht vorhanden oder nicht nutzbar ist. Die Sensorik kann beispielsweise Tastenschnittstellen umfassen, an denen noch keine Tasterwippe angebracht ist, da es sich hier meist um hochwertige Designteile handelt, die erst nach Abschluss einer Bauphase angebracht werden.

Sensoren können zwar aktuelle Umgebungswerte liefern, aber zum Testen müssen häufig andere Größen simuliert werden. Beispielsweise müssen die Temperatur, Windstärken, CO₂ - Konzentrationen oder ähnliche Größen simuliert werden, um eine Reaktion beteiligter Endgeräte zu kontrollieren.

Der Erfindung liegt daher die Aufgabe zugrunde, ein Endgerät zuverlässig und möglichst unabhängig von dessen Konfigurierungszustand und von dessen Umgebung zu testen und/ oder in Betrieb zu nehmen.

Erfindungsgemäß wird die voranstehende Aufgabe durch ein Verfahren mit den Merkmalen des Patentanspruchs 1 gelöst.

Funktionen einer Handbedienung eines Endgeräts können auch von einem externen Eingabegerät ausgeführt werden, welches mit diesem nicht durch physikalische Leitungen oder Kabel in mechanischer Verbindung steht.

Funktionen einer Handbedienung, wie die Anzeige, Steuerung und Simulation von Betriebsfunktionen, können auf ein externes Eingabegerät ausgelagert werden. Das Eingabegerät kann insbesondere zu einem Wirkort transportiert werden, um die Wirkungen, die ein Endgerät verursacht, vor Ort unmittelbar prüfen zu können. Weiterhin können Sensorwerte leicht simuliert werden, ohne reale Komponenten einzusetzen. Hierdurch kann ein System besser getestet werden.

Des Weiteren ist eine externe Handbedienung deutlich flexibler und damit auch einfacher handhabbar, da diese frei konfigurierbar ist und nicht durch die Anzahl oder insbesondere bauliche Anordnung der vorhandenen Ein- und Ausgabemöglichkeiten begrenzt ist. Es ist denkbar, als Eingabegerät ein Smart Phone, ein Tablet-PC oder ein ähnliches Eingabegerät zu verwenden. Ein Bediener des Endgeräts kann einmalig ein solches Eingabegerät anschaffen oder besitzt im Idealfall bereits ein solches Eingabegerät. Hierdurch können Kosten gespart werden.

Erfindungsgemäß ist erkannt worden, dass das Verfahren gemäß dem unabhängigen Anspruch 1 es ermöglicht, auf Anlagen aus der Ferne zuzugreifen, insbesondere auf Anlagen, die zum Zeitpunkt des Zugriffs noch gar nicht oder nur unvollständig konfiguriert sind.

Das Herstellen der Verbindung erfolgt, indem durch das Eingabegerät eine temporäre Zieladresse für das Endgerät vergeben wird, um dieses eindeutig als Kommunikationspartner für das Eingabegerät festzulegen. Neu eingebaute Endgeräte haben im Auslieferungszustand alle die gleiche Zieladresse. Diese Zieladresse kann nicht für eine Fernsteuerung oder Inbetriebnahme verwendet werden, wenn sie mehrfach in einer Anlage vorhanden ist, da keine Eindeutigkeit gegeben ist. Das Eingabegerät weist daher einem Endgerät eine temporäre freie Zieladresse zu und setzt nach der Konfiguration die Zieladresse des Endgeräts wieder auf deren Ursprungswert zurück. Die Adressvergabe des Eingabegerätes ist nur temporär, so dass nach einer bestimmten Zeit das Endgerät wieder automatisch seine ursprüngliche Adresse zeigt, wenn nämlich keine Fernsteuerung durch das Eingabegerät mehr erfolgt. Das Auffinden einer temporären freien Zieladresse kann das gleiche Verfahren nutzen, welches auch das KNX-Werkzeug-"ETS" (Engineering Tool Software) nutzt. Bei der Herstellung einer Verbindung muss die Zieladresse des Endgerätes dem Eingabegerät bekannt sein. Eine Handbedienung ist nur dann erfolgreich auslagerbar, wenn eine Verbindung zwischen dem Eingabegerät und dem Endgerät zuverlässig hergestellt ist.

Ein Broadcast (englisch für "Rundruf") ist eine Nachricht, bei der Datenpakete von einem Punkt aus an alle Teilnehmer eines Nachrichtennetzes übertragen werden. Zur Fernsteuerung, Inbetriebnahme oder Diagnose einzelner Komponenten werden zwischen Eingabegerät und Endgeräte Punkt-zu-Punkt verbindungsorientierte oder verbindungslose Telegramme verwendet.

Weiter vorteilhaft erfolgt das Herstellen der Verbindung, indem mindestens ein Kommunikationsmedium verwendet wird, das im Eingabegerät vorgesehen ist. Als Kommunikationsmedium werden im Eingabegerät verbaute Schnittstellen wie WI-FI (Marke), Bluetooth (Marke), Near Field Communication (NFC) oder ähnliche Einrichtungen verwendet. Wird ein Kommunikationsmedium verwendet, das direkt zwischen Eingabegerät und Endgerät eine Verbindung aufbaut, beispielsweise Bluetooth (Marke) oder NFC, können direkt herstellerspezifische Kommunikationserweiterungen zur Fernsteuerung verwendet werden.

Vorteilhaft erfolgt das Herstellen der Verbindung, indem ein Medienkoppler verwendet wird. Bei Geräten, die über keine der zuvor erwähnten Schnittstellen verfügen, wird die Kommunikation mit Hilfe eines Medienkopplers, wie insbesondere eines KNX-IP-Routers und/ oder insbesondere über einen Standard WI-FI (Marke)-Access-Point mit der Gebäudetechnik hergestellt. Diese Kommunikationsart kann um herstellerspezifische Protokollergänzungen erweitert werden. Diese herstellerspezifischen Erweiterungen können bei der Durchführung des hier beschriebenen Verfahrens verwendet werden.

Auch Endgeräte, die bislang noch keine Handbedienung haben, bei denen eine Handbedienung allerdings zum Testen während und nach der Inbetriebnahme zu Diagnosezwecken und zur Simulation von Ereignissen oder Zuständen vorteilhaft wäre, könnten mit einer Handbedienung ausgerüstet werden.

Das hier beschriebene Verfahren kann als Standardverfahren durchgeführt werden, welches bei bereits konfigurierten Systemen anwendbar ist, um eine Kommunikation zwischen einzelnen Komponenten zu erreichen. Wenn ein solches Standardverfahren nicht durchführbar ist, kann das Verfahren als Adressierungsverfahren durchgeführt werden, das zu einer erfolgreichen Kommunikation führt, auch wenn ein System noch nicht konfiguriert ist.

Vorteilhaft sind die Endgeräte trotz topologischer Inkonsistenz erreichbar, also auch über noch nicht vollständig parametrierte Systemkomponenten, wie beispielsweise Koppler, hinweg. Um eine Punkt-zu-Punkt-Kommunikation durchführen zu können, müssen beide Kommunikationspartner die jeweilige Adresse des anderen Kommunikationspartners kennen, dies ist mit dem hier beschriebenen Verfahren ermöglicht.

In der Zeichnung zeigen
- Fig. 1: eine schematische Darstellung eines Ablaufs, der im Eingabegerät durchgeführt wird, um das effektivste Verfahren zur Ausführung einer Fernsteuerung zu ermitteln,
- Fig. 2: zeigt schematisch eine Punkt-zu-Punkt-Kommunikation über das gleiche Kommunikationsmedium,
- Fig. 3: zeigt schematisch eine Standard-Kommunikation über das Feldbusprotokoll,
- Fig. 4: zeigt schematisch eine Kommunikation über das Feldbusprotokoll, wobei eine temporäre Zieladresse vergeben wird, und
- Fig. 5: zeigt schematisch eine weitere Kommunikation über das Feldbusprotokoll.

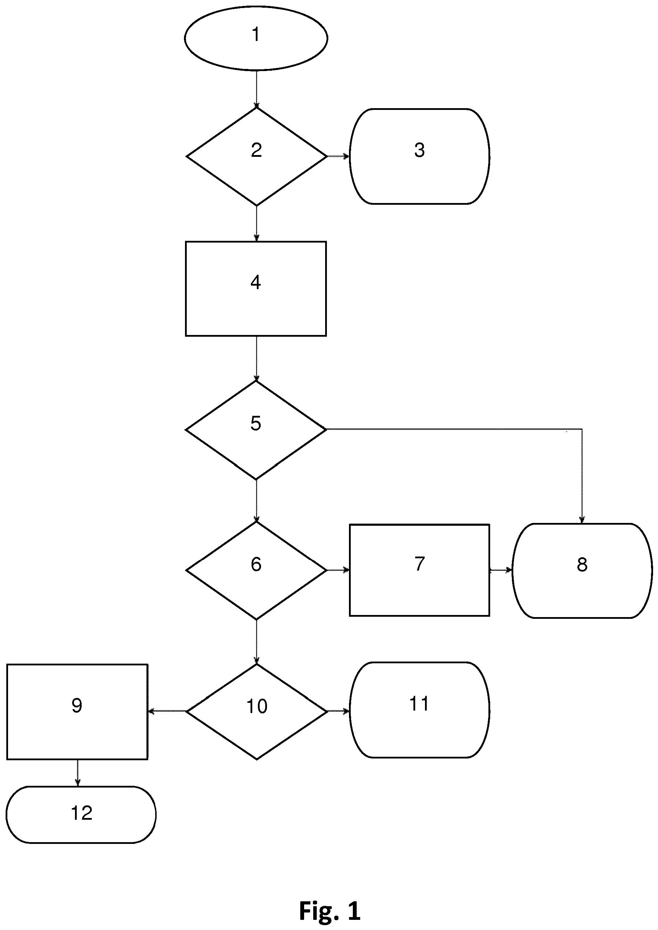

Fig. 1 zeigt anhand eines Flussdiagramms eine schematische Darstellung eines Ablaufs, der im Eingabegerät durchgeführt wird, um das effektivste Verfahren zur Ausführung einer Fernsteuerung zu ermitteln. Die in Klammern angegebenen Zahlen beschreiben den Ablauf.

Ein solches Verfahren zum Bedienen, Einrichten, Inbetriebnehmen und/ oder Testen eines Endgeräts, welches in der Gebäudetechnik verwendet wird, umfasst die folgenden Schritte:
Herstellen einer Verbindung zwischen einem Endgerät mit einer ersten Handbedienung und einem von diesem separierten Eingabegerät mit einer zweiten Handbedienung,
Bedienen der zweiten Handbedienung, um das Endgerät von einem Bedienort aus fernzusteuern und zu bedienen, der vom Aufstellort des Endgeräts entfernt ist.

Zunächst erfolgt ein Starten der zweiten Handbedienung (1). Es wird geprüft, ob eine Verbindung direkt zwischen dem Eingabegerät und dem Endgerät hergestellt werden kann (2). Falls dies möglich ist, erfolgt eine Bedienung direkt über das bereitgestellte Protokoll (3).

Falls dies nicht möglich ist, muss das genannte Verfahren unter Ausführung einer Adressierung durchgeführt werden (4).

Es wird geprüft, ob das Endgerät eine gültige Zieladresse aufweist (5). Falls dem so ist, erfolgt eine Bedienung direkt über das Verfahren mit herstellerspezifischen Erweiterungen zur Simulation der Handbedienung (8).

Falls dem nicht so ist, wird geprüft, ob das Endgerät über eine temporäre Zieladresse korrekt adressiert werden kann (6). Wenn dies möglich ist, erfolgt ein Setzen einer temporären Zieladresse im Endgerät (7) und das genannte Verfahren wird durchgeführt.

Das Herstellen der Verbindung erfolgt dann, indem durch das Eingabegerät eine temporäre Zieladresse für das Endgerät vergeben wird, um dieses eindeutig als Kommunikationspartner für das Eingabegerät festzulegen.

Falls keine temporäre Zieladresse korrekt adressiert werden kann, wird geprüft, ob das Endgerät über ein Broadcast oder ein System Broadcast erreicht werden kann (10). Falls dies nicht möglich ist, ist keine Kommunikation möglich (9). Es ist dann auch Keine Fernsteuerung möglich (12).

Falls das Endgerät über ein Broadcast oder System Broadcast erreicht werden kann, erfolgt die Bedienung direkt über eine herstellerspezifische Erweiterung des Verfahrens mit herstellerspezifischen Erweiterungen zur Simulation der Handbedienung (11).

Das Herstellen der Verbindung erfolgt, indem ein Broadcast-Telegramm versendet wird. Das Herstellen der Verbindung kann außerdem erfolgen, indem die Seriennummer des Endgeräts verwendet wird, um dieses eindeutig als Kommunikationspartner für das Eingabegerät festzulegen.

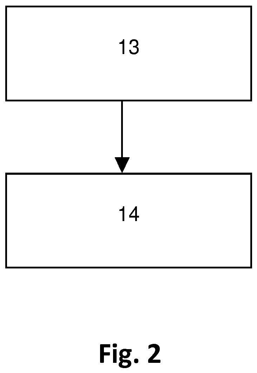

Fig. 2 zeigt eine Anordnung, umfassend mindestens ein Endgerät 14 zur Verwendung in der Gebäudetechnik, wobei das Endgerät 14 eine erste Handbedienung aufweist, mit welcher das Endgerät 14 lokal bedienbar ist.

Es ist ein Eingabegerät 13 vorgesehen, welches eine zweite Handbedienung aufweist, wobei das Endgerät 14 durch die zweite Handbedienung fernbedienbar ist und wobei das Eingabegerät 13 vom Endgerät 14 örtlich und baulich separiert ist.

Das Herstellen der Verbindung zwischen Eingabegerät 13 und Endgerät 14 erfolgt, indem das gleiche Kommunikationsmedium verwendet wird. Es erfolgt eine Kommunikation Punkt-zu-Punkt über das gleiche Kommunikationsmedium. Es können WI-FI (Marke), Bluetooth (Marke), Near Field Communication (NFC) oder ähnliche Einrichtungen verwendet werden.

Es werden außerdem herstellerspezifische Protokollerweiterungen bzw. herstellerspezifische Fernsteuerdaten verwendet.

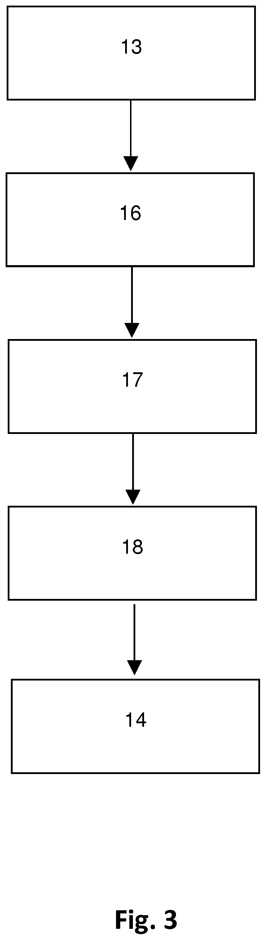

Fig. 3 zeigt schematisch eine Standard-Kommunikation über das Feldbusprotokoll.

Ein Eingabegerät 13 kann ein Kommunikationsmedium nutzen, um über einen Zugangspunkt 16 eine Verbindung mit dem Endgerät 14 herzustellen. Das Eingabegerät 13 kann einen Medienkoppler 17 nutzen, um eine Verbindung mit dem Endgerät 14 herzustellen. Das Eingabegerät 13 kann einen feldbusspezifischen Koppler 18 nutzen, um eine Verbindung mit dem Endgerät 14 herzustellen. Über eine Feldbusadressierung kann eine Verbindung zum Endgerät 14 hergestellt werden. Die Feldbusadressierung erfolgt unter Nutzung von herstellerspezifischen Fernsteuerdaten.

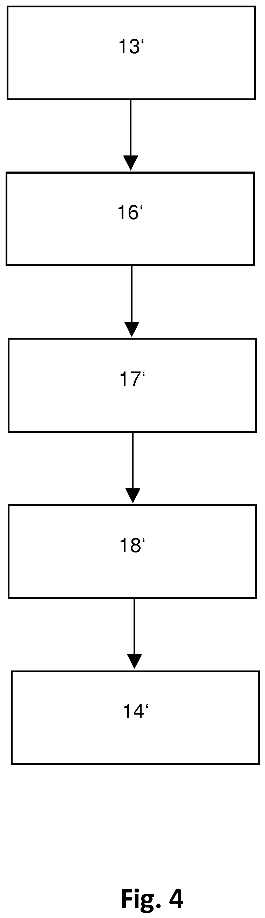

Fig. 4 zeigt schematisch eine Kommunikation über das Feldbusprotokoll, wobei eine temporäre Zieladresse vergeben wird.

Ein Eingabegerät 13' kann ein Kommunikationsmedium nutzen, um über einen Zugangspunkt 16' eine Verbindung mit dem Endgerät 14' herzustellen. Das Eingabegerät 13' kann einen Medienkoppler 17' nutzen, um eine Verbindung mit dem Endgerät 14' herzustellen. Das Eingabegerät 13' kann einen feldbusspezifischen Koppler 18' nutzen, um eine Verbindung mit dem Endgerät 14' herzustellen. Über eine Feldbusadressierung kann eine Verbindung zum Endgerät 14' hergestellt werden. Die Feldbusadressierung erfolgt unter Nutzung von herstellerspezifischen Fernsteuerdaten und der Vergabe einer temporären Zieladresse für das Endgerät 14'.

Insoweit erfolgt das Herstellen der Verbindung, indem durch das Eingabegerät 13' eine temporäre Zieladresse für das Endgerät 14' vergeben wird, um dieses eindeutig als Kommunikationspartner für das Eingabegerät 13' festzulegen.

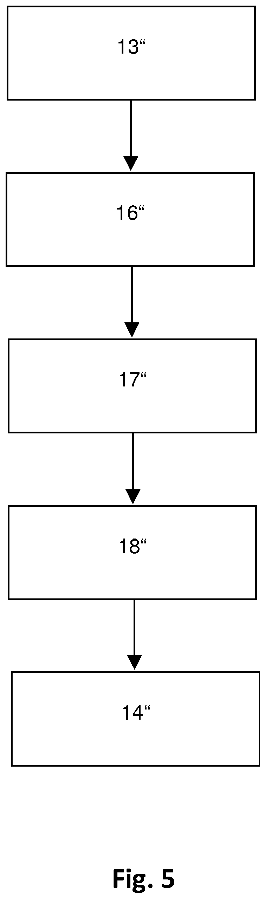

Fig. 5 zeigt schematisch eine Kommunikation über das Feldbusprotokoll, wobei ein Broadcast-Telegramm bzw. ein Broadcast oder System Broadcast zur Adressierung verwendet wird.

Ein Eingabegerät 13" kann ein Kommunikationsmedium nutzen, um über einen Zugangspunkt 16" eine Verbindung mit dem Endgerät 14" herzustellen. Das Eingabegerät 13" kann einen Medienkoppler 17" nutzen, um eine Verbindung mit dem Endgerät 14" herzustellen. Das Eingabegerät 13" kann einen feldbusspezifischen Koppler 18" nutzen, um eine Verbindung mit dem Endgerät 14" herzustellen. Über eine Feldbusadressierung kann eine Verbindung zum Endgerät 14" hergestellt werden. Die Feldbusadressierung erfolgt unter Nutzung von herstellerspezifischen Fernsteuerdaten und eines Broadcast-Telegramms bzw. eines Broadcasts oder System Broadcasts zur Adressierung.

Insoweit erfolgt das Herstellen der Verbindung, indem ein Broadcast-Telegramm versendet wird. Das Herstellen der Verbindung erfolgt bevorzugt, indem die Seriennummer des Endgeräts 14" verwendet wird, um dieses eindeutig als Kommunikationspartner für das Eingabegerät 13" festzulegen.

### Bezugszeichenliste

- 13, 13', 13": Eingabegerät
- 14, 14', 14": Endgerät
- 16, 16', 16": Zugangspunkt
- 17, 17', 17": Medienkoppler
- 18, 18', 18": feldbusspez. Koppler

## Patentansprüche

1. Verfahren zum Bedienen, Einrichten, Inbetriebnehmen und/ oder Testen eines Endgeräts (14, 14', 14"), welches in der Gebäudetechnik verwendet wird, umfassend die folgenden Schritte:
Herstellen einer Verbindung zwischen einem Endgerät (14, 14', 14") und einem von diesem separierten Eingabegerät (13, 13', 13") mit einer Handbedienung, Bedienen der Handbedienung, um das Endgerät (14, 14', 14") von einem Bedienort aus fernzusteuern und zu bedienen, der vom Aufstellort des Endgeräts (14, 14', 14") entfernt ist,
**dadurch gekennzeichnet, dass**
das Herstellen der Verbindung erfolgt, indem durch das Eingabegerät (13, 13', 13") eine temporäre Zieladresse für das Endgerät (14, 14', 14") vergeben wird, um dieses eindeutig als Kommunikationspartner für das Eingabegerät (13, 13', 13") festzulegen, wobei geprüft wird, ob das Endgerät (14, 14', 14") eine gültige Zieladresse aufweist, und falls dem nicht so ist, geprüft wird, ob das Endgerät (14, 14', 14") über eine temporäre Zieladresse korrekt adressiert werden kann (6), und wenn dies möglich ist, ein Setzen der temporären Zieladresse im Endgerät (14, 14', 14") erfolgt.

2. Verfahren nach Anspruch 1, **dadurch gekennzeichnet, dass** das Herstellen der Verbindung erfolgt, indem mindestens ein Kommunikationsmedium verwendet wird, das im Eingabegerät (13, 13', 13") vorgesehen ist, und/oder dass das Herstellen der Verbindung erfolgt, indem ein Medienkoppler (17, 17', 17") verwendet wird.

## Claims

1. Method for operating, setting up, starting up and/or testing a terminal (14, 14', 14") that is used in buildings engineering, comprising the following steps:
making a connection between a terminal (14, 14', 14") and an input device (13, 13', 13"), which is separated from the latter, using a hand-held control,
operating the hand-held control in order to remotely control and operate the terminal (14, 14', 14") from an operating location, which is remote from the installation location of the terminal (14, 14', 14"),
**characterized in that**
the connection is made by using the input device (13, 13', 13") to allocate a temporary destination address for the terminal (14, 14', 14"), in order to uniquely define said terminal as a communication partner for the input device (13, 13', 13"), wherein a check is performed to determine whether the terminal (14, 14', 14") has a valid destination address, and, if this is not the case, a check is performed to determine whether the terminal (14, 14', 14") can be correctly addressed using a temporary destination address (6), and, if this is possible, the temporary destination address is set in the terminal (14, 14', 14").

2. Method according to Claim 1, **characterized in that** the connection is made by using at least one communication medium provided in the input device (13, 13', 13"), and/or **in that** the connection is made by using a media coupler (17, 17', 17").

## Revendications

1. Procédé permettant de commander, de configurer, de mettre en service et/ou de tester un terminal (14, 14', 14") qui est utilisé dans la technique du bâtiment, comprenant les étapes suivantes consistant à :
établir une liaison entre un terminal (14, 14', 14") et un appareil de saisie (13, 13', 13") séparé de celui-ci et pourvu d'une commande manuelle,
commander la commande manuelle pour télécommander et commander le terminal (14, 14', 14") à partir d'un lieu de commande qui est éloigné du lieu d'installation du terminal (14, 14', 14"),
**caractérisé en ce que** l'établissement de la liaison est effectué **en ce que** l'appareil de saisie (13, 13', 13") affecte une adresse cible temporaire au terminal (14, 14', 14") afin de le définir de manière univoque comme partenaire de communication pour l'appareil de saisie (13, 13', 13"), dans lequel il est vérifié si le terminal (14, 14', 14") présente une adresse cible valable, et si ce n'est pas le cas, il est vérifié si le terminal (14, 14', 14") peut être adressé (6) correctement par le biais d'une adresse cible temporaire, et si c'est possible, une entrée de l'adresse cible temporaire dans le terminal (14, 14', 14") est effectuée.

2. Procédé selon la revendication 1, **caractérisé en ce que** l'établissement de la liaison est effectué **en ce qu'**au moins un moyen de communication est utilisé qui est prévu dans l'appareil de saisie (13, 13', 13"), et/ou **en ce que** l'établissement de la liaison est effectué **en ce qu'**un coupleur de médias (17, 17', 17") est utilisé.
